# EUROPÄISCHE PATENTSCHRIFT

(11) **EP 0 966 623 B1**
(45) Veröffentlichungstag und Bekanntmachung des Hinweises auf die Patenterteilung: **27.06.2001**
(21) Anmeldenummer: 98912438.3
(22) Anmeldetag: 04.03.1998
(51) Int. Cl.: F16G 13/16, H02G 3/04

(54) **SCHUTZELEMENT MIT EINEM DECKEL, DER IN ZWEI UNTERSCHIEDLICHE STABILE STELLUNGEN BRINGBAR IST**
PROTECTIVE ELEMENT WITH A LID WHICH CAN BE PLACED IN TWO DIFFERENT STABLE POSITIONS
ELEMENT DE PROTECTION MUNI D'UN COUVERCLE POUVANT ETRE PLACE DANS DEUX DIFFERENTES POSITIONS STABLES

(30) Priorität: 13.03.1997 DE 19710489; 11.04.1997 DE 19715170
(43) Veröffentlichungstag der Anmeldung: 29.12.1999
(73) Patentinhaber: Kabelschlepp GmbH, 57074 Siegen (DE)
(72) Erfinder: HEIDRICH, Klaus, D-57250 Netphen (DE); KLEIN, Lorenz, D-57250 Netphen (DE); WEBER, Willibald, D-57250 Netphen (DE); WEHLER, Herbert, D-57290 Neunkirchen (DE)
(74) Vertreter: Kahlhöfer, Hermann, Dipl.-Phys.
(86) Internationale Anmeldenummer: EP9801213
(87) Internationale Veröffentlichungsnummer: WO9840644

(56) Entgegenhaltungen:
- EP-A- 0 126 862
- DE-A- 4 313 075
- DE-C- 4 413 355
- DE-U- 7 800 098
- DE-U- 8 800 544
- US-A- 4 406 379

## Beschreibung

Der Gegenstand der Patentanmeldung betrifft ein Schutzelement mit den Merkmalen des Oberbegriffs des Anspruchs 1.

Zum Schutz von Leitungen, insbesondere von Versorgungsleitungen, die zwischen einem ortsfesten und einem beweglichen Verbraucher verlegt sind, werden Schutzelemente verwendet, die einen Kanalabschnitt aufweisen, die zur Aufnahme von Leitungen geeignet sind. Es ist bekannt, eine Mehrzahl solcher Schutzelemente miteinander gelenkig zu verbinden, wodurch eine sogenannte Energieführungskette gebildet wird. Aus dem Stand der Technik sind zahlreiche Beispiele für die Ausgestaltung der Schutzelemente bekannt. Im Allgemeinen weist ein Schutzelement einen Kanalabschnitt auf, der durch zwei voneinander beabstandete, einander gegenüberliegende Seitenwände, die durch eine Bodenwand verbunden sind, und einen Deckel begrenzt. Der Deckel ist mit einer Seitenwand gelenkig verbunden und erstreckt sich im geschlossenen Zustand des Kanalabschnitts zur gegenüberliegenden Seitenwand hin. Ein solches Schutzelement ist beispielsweise durch die DE 43 13 075 A1 bekannt. Der Deckel ist mit einer Seitenwand lösbar mittels eines Scharniers verbunden. Er ist mit der gegenüberliegenden Seitenwand verrastbar. Hierzu weist der Deckel Rastmittel auf, die mit entsprechenden Rastmitteln der Seitenwand zusammenwirken. Zur gelenkigen Verbindung des Deckels mit der Seitenwand wird durch die DE 43 13 075 ein Scharnier vorgeschlagen, daß durch Lagerzapfen die am Deckel ausgebildet sind, sowie durch Lagerausnehmungen in den Seitenwänden zur rastenden Aufnahme und Führung der Lagerzapfen gebildet sind. Durch diese Ausgestaltung der Scharniere wird ein Verschwenken des Deckels um 180° ermöglicht, wobei der Deckel in jeder beliebigen Schwenkstellung abnehmbar ist.

Eine weitere Ausgestaltung eines Schutzelementes ist durch die DE 33 18 365 C2 bekannt. Das Schutzelement weist voneinander beabstandete einander gegenüberliegende Seitenwände auf, die über einen Deckel miteinander verbunden sind. Der Deckel ist an einer Seitenwand mit einem lösbaren Scharnier angelenkt und mit der anderen Seitenwand mittels eines elastischen Hakens verriegelbar. Die DE 33 18 365 C2 schlägt zur Ausgestaltung der Gelenkverbindung zwischen dem Deckel und der Seitenwand vor, daß in die freie Kante der Seitenwand eine freiliegend eingeformte Gelenkachse mit senkrecht zu den Seitenwänden abgeflachten Querschnitt und abgerundeten Schmalseiten und aus einer in das Ende des Deckels eingeformten, mit Hinterschneidungen versehenen, abgeschnitteten, teilkreisförmigen Ausnehmungen besteht. Der Vorteil dieser Ausgestaltung der Gelenkverbindung besteht darin, daß nach dem Aufstecken des Deckels auf die Gelenkachse und Verschwenken in Richtung auf die gegenüberliegende Seitenwand der Deckel kraft- und formschlüssig mit der Gelenkachse verspannt ist. Ein solcher Deckel ist einseitig verschwenkbar.

Durch die DE 44 13 355 C1 ist eine nicht lösbare Gelenkverbindung zwischen einem Deckel und einer Seitenwand eines Schutzelementes bekannt. Zur Ausgestaltung der nicht lösbaren Verbindung wird nach der DE 44 13 355 C1 vorgeschlagen, daß der Deckel mit einer länglichen Zunge ausgestaltet wird. Die Seitenwand ist mit einem Zapfen versehen, um den herum die Zunge verformt und anschließend die Zunge fixiert wird.

Der häufigste Verwendungsfall von Schutzelementen ist der, bei dem der Deckel eines jeden Schutzelementes im wesentlichen in einer horizontalen Ebene liegt. Solche Deckel sind auch um mehr als 90° verschwenkbar, so daß in geöffnetem Zustand des Schutzelementes der Schwerpunkt des Dekkels außerhalb des Kanalabschnitts eines Schutzelementes liegt. Hierdurch wird erreicht, daß ein selbsttätiges Zufallen des Deckels aufgrund seiner Schwerkraft verhindert wird. Ein Zufallen des Deckels kann jedoch bei den bekannten Ausgestaltungen eines Schutzelementes nicht zuverlässig verhindert werden. Insbesondere aufgrund eines begrenzten Einbauraumes ist es nicht immer möglich den Deckel weit genug zu verschwenken. Desweiteren kann durch Vibrationen oder des gleichen ein Zufallen des Deckels eintreten. Dies führt insbesondere beim nachträglichen Verlegen von Leitungen zu einem erhöhten Arbeitsaufwand. Es ist auch eine weitere Kontrolle notwendig, durch die überprüft wird, ob der Deckel nur zugefallen oder ordnungsgemäß in seine vorgegebene Stellung gebracht wurde.

Hiervon ausgehend liegt der vorliegenden Erfindung die Aufgabe zugrunde ein Schutzelement anzugeben, bei dem der Deckel nicht zufällig verschwenkt wird.

Diese Aufgabe wird erfindungsgemäß durch ein Schutzelement mit den Merkmalen des Anspruchs 1 gelöst. Vorteilhafte Weiterbildungen und Ausgestaltungen sind Gegenstand der Unteransprüche.

Das erfindungsgemäße Schutzelement weist einen Kanalabschnitt, der durch zwei voneinander beabstandete, einander gegenüberliegende Seitenwände, eine Bodenwand und einen Deckel begrenzt ist, auf. Die Bodenwand ist mit den Seitenwänden verbunden. Der Deckel ist an einer Seitenwand angelenkt und erstreckt sich zur gegenüberliegenden Seitenwand hin. Der Deckel mit der Seitenwand sind durch eine Gelenkverbindung untereinander verbunden, durch die der Deckel in zwei unterschiedliche stabile Stellungen bringbar ist. Unter einer stabilen Stellung wird eine Stellung verstanden, aus der der Deckel unter Einsatz einer Kraft bringbar ist, so daß ein zufälliges Verschwenken des Deckels bei geringer Krafteinwirkung auf den Deckel nicht ermöglicht wird. Vorzugsweise ist die erste stabile Stellung des Deckels die, in der der Deckel den Kanalabschnitt wenigstens teilweise, vorzugsweise ganz, freigibt.

Die zweite stabile Stellung ist die Stellung, in der der Deckel den Kanalabschnitt wenigstens teilweise, vorzugsweise ganz, verschließt.

Nach einem weiteren vorteilhaften Gedanken wird vorgeschlagen, daß der Deckel gegen eine Federkraft aus der einen in die andere stabile Stellung bringbar ist. Der Begriff "Federkraft" ist im weitesten Sinne zu verstehen. Unter einer Federkraft wird hier auch die Kraft verstanden, die notwendig ist, um eine elastische Verformung der Bauteile der Gelenkverbindung zu bewirken. Nach einer elastischen Verformung gelangen die Bauteile der Gelenkverbindung in ihre ursprüngliche Gestalt zurück.

Die Gelenkverbindung weist vorzugsweise einen Arm mit mindestens einem federelastischen Bereich auf. Der Arm ist mit seinem ersten Ende mit dem Deckel und mit seinem zweiten Ende mit der Seitenwand gelenkig verbunden. Der Deckel ist um eine separate Gelenkachse verschwenkbar. Die Gelenkachse ist hierbei vorzugsweise in einer Seitenwand ausgebildet. Sie liegt zwischen den Enden des Armes der Gelenkverbindung. Die Gelenkverbindung ist ferner so ausgestaltet, daß die Federkraft, die überwunden werden muß, um den Deckel aus der einen stabilen Stellung in die andere stabile Stellung zu überführen, ihren Maximalwert dann erreicht, wenn während eines Verschwenkvorgangs des Deckels das erste und das zweite Ende des Arms sowie die Gelenkachse auf einer gemeinsamen Geraden liegen. Diese Ausgestaltung der Gelenkverbindung hat den Vorteil, daß ein Schnappeffekt erreicht wird. Hat der Deckel während des Verschwenkvorgangs eine Stellung eingenommen, in dem die Federkraft ihren Maximalwert erreicht hat, so wird bei einer weiteren Verschwenkung des Deckels der Deckel durch den federelastischen Arm selbstätig in die nächstmögliche stabile Stellung gebracht.

Der Arm als solcher kann auch insgesamt federelastisch ausgebildet sein.
Bevorzugt ist eine Ausgestaltung des Arms, bei dem der federelastische Bereich durch einen im wesentlichen bogenförmigen Abschnitt des Armes ausgebildet ist. Der Arm kann insgesamt bogenförmig ausgebildet sein. Während des Verschwenkvorgangs geht aufgrund der Ausgestaltung des bogenförmigen Abschnitts des Armes und der geometrischen Anordnung der Gelenkachse sowie der Anlenkpunkte des Armes am Deckel sowie an der Seitenwand der bogenförmige Abschnitt beim Verschwenken des Deckels aus der einen stabilen Stellung in die andere stabile Stellung in einen im wesentlichen geraden Abschnitt über. Mit anderen Worten, während des Verschwenkvorgangs wird der bogenförmige Abschnitt des Armes begradigt, wodurch der Arm auf den Deckel eine Zugkraft ausübt. Hat die Kraft ihren Maximalwert während des Verschwenkvorgangs erreicht, so schnappt der Deckel in die nächstliegende stabile Stellung ein.

Nach einer weiteren vorteilhaften Ausgestaltung wird vorgeschlagen, daß zwei Teilarme einen im wesentlichen L-förmigen Arm bilden. Die L-förmige Ausgestaltung des Armes erfüllt die gleiche Funktion wie eine bogenförmige Ausgestaltung des Armes, wie vorstehend ausgeführt. Während eines Verschwenkvorgangs wird der L-förmige Arm so beansprucht, daß dieser quasi aufgebogen werden. Hat der Deckel eine Position erreicht, in der das erste und das zweite Ende des Armes sowie die Gelenkachse auf einer gemeinsamen Geraden liegen, so hat der L-förmige Arm seine maximale Aufbiegung erfahren, die jedoch nicht so groß ist, daß eine plastische Verformung des Armes eintritt, wodurch der Arm aufgrund seiner Federkraft den Deckel in die nächstliegende stabile Stellung bringt.

Um den Kanalabschnitt durch den Deckel vollständig freizugeben, wird vorgeschlagen, daß der Deckel mittels wenigstens eines Schwenkarmes mit der Seitenwand verbunden ist, wobei der Schwenkarm um die Gelenkachse verschwenkbar ist.

Gemäß einer weiteren vorteilhaften Ausgestaltung des Schutzelementes wird vorgeschlagen, daß zwischen zwei benachbarten Armen ein Schwenkarm vorgesehen ist.

Der Deckel ist durch wenigstens einen Arm und gegebenenfalls einen Schwenkarm mit einer Seitenwand verbunden. Um sicherzustellen, daß Leitungen, die im Kanalabschnitt eines Schutzelementes angeordnet sind, den Deckel nicht öffnen und so aus dem Kanalabschnitt herausspringen, wird vorgeschlagen, daß der Deckel mit der gegenüberliegenden Seitenwand lösbar verbindbar ist. Hierzu weist der Deckel und die Seitenwand Verbindungsmittel zum lösbaren Verbinden auf. Diese können beispielsweise in Form eines Hakens, der am Deckel ausgebildet ist und einer entsprechend in der Seitenwand ausgebildeten Ausnehmung ausgebildet sein. Bevorzugt ist eine Ausgestaltung der Verbindungsmittel in Form von Rastelementen.

Nach dem bisher bekannten Stand der Technik ist ein Deckel ein separates Bauteil, welches gegebenenfalls, wie durch die DE 44 13 355 C1 bekannt, durch einen weiteren Fertigungsschritt mit der Seitenwand nicht lösbar verbunden wird. Durch die erfindungsgemäße Ausgestaltung der Gelenkverbindung in Verbindung mit einem Schwenkarm, kann der Deckel mit der Seitenwand einteilig ausgebildet sein. Auch das ganze Schutzelement kann in einem einzigen Herstellungsschritt hergestellt werden. Das Schutzelement besteht hierbei aus einem Kunststoff. Die Herstellung eines solchen Schutzelementes erfolgt durch Spritzgießen.

Nach einem weiteren vorteilhaften Gedanken wird vorgeschlagen, daß das Schutzelement mit anderen Schutzelementen gelenkig verbindbar ist, so daß die Kanalabschnitte einen Kanal für eine Leitung bilden.

Weitere Vorteile und Einzelheiten eines erfindungsgemäßen Schutzlementes werden anhand des in der Zeichnung dargestellten Ausführungsbeispiels erläutert. Es zeigen:
- Fig. 1: perspektivisch ein Schutzelement,
- Fig. 2: ein Schutzelement in der Vorderansicht mit geöffnetem Deckel,
- Fig. 3: eine Draufsicht auf das Schutzelement nach Fig. 1 mit geöffnetem Deckel,
- Fig. 4: eine Vorderansicht des Schutzelementes mit geschlossenem Deckel,
- Fig. 5: das Schutzelement mit geschlossenem Deckel in einer Draufsicht,
- Fig. 6: eine Schnittansicht des Schutzelementes mit geöffnetem Deckel,
- Fig. 7: eine Schnittansicht des Schutzelementes mit geschlossenem Deckel und
- Fig. 8: die Lage des Schutzelementes in einer Spritzform.

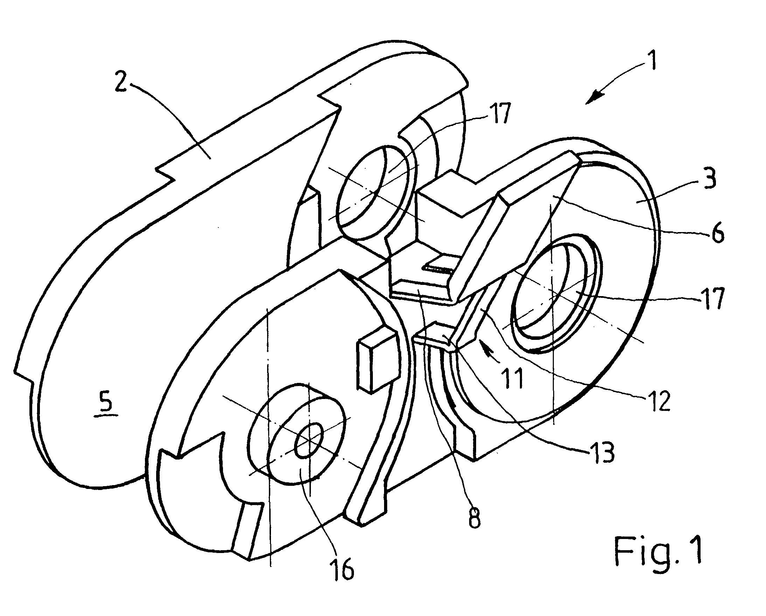

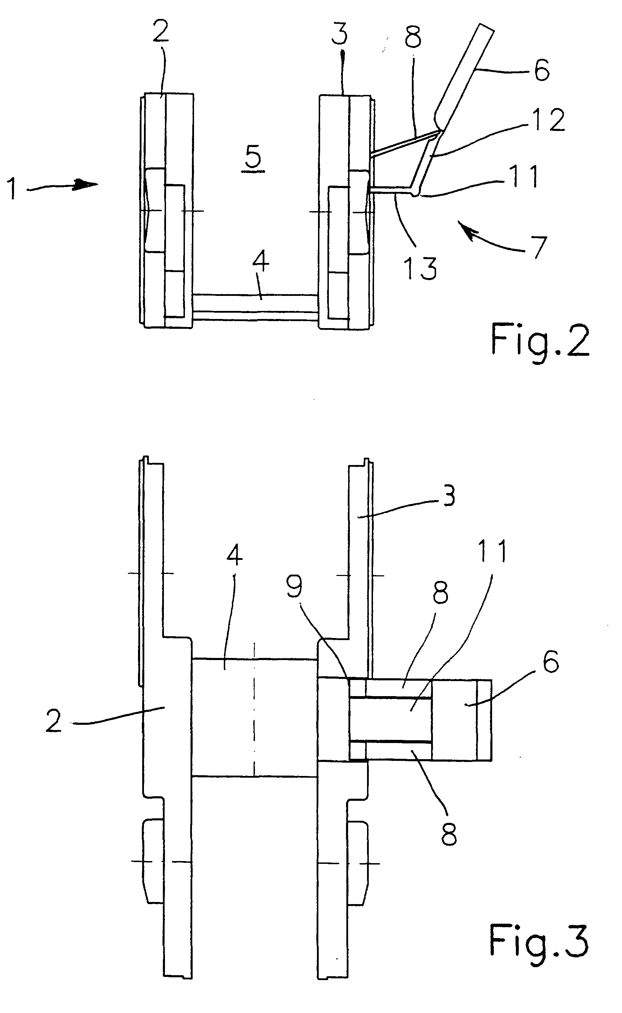

Fig. 1 zeigt ein Ausführungsbeispiel eines erfindungsgemäßen Schutzelementes 1 in einer perspektivischen Ansicht. Das Schutzelement 1 weist zwei voneinander beabstandete, einander gegenüberliegende Seitenwände 2, 3 auf. Die Seitenwände 2, 3 sind durch eine Bodenwand 4, wie dies aus der Fig. 2 ersichtlich ist, verbunden. An der Seitenwand 3 ist ein Deckel 6 angelenkt. Die Seitenwände 2, 3, die Bodenwand 4 und der Deckel 6 begrenzen einen Kanalabschnitt 5.

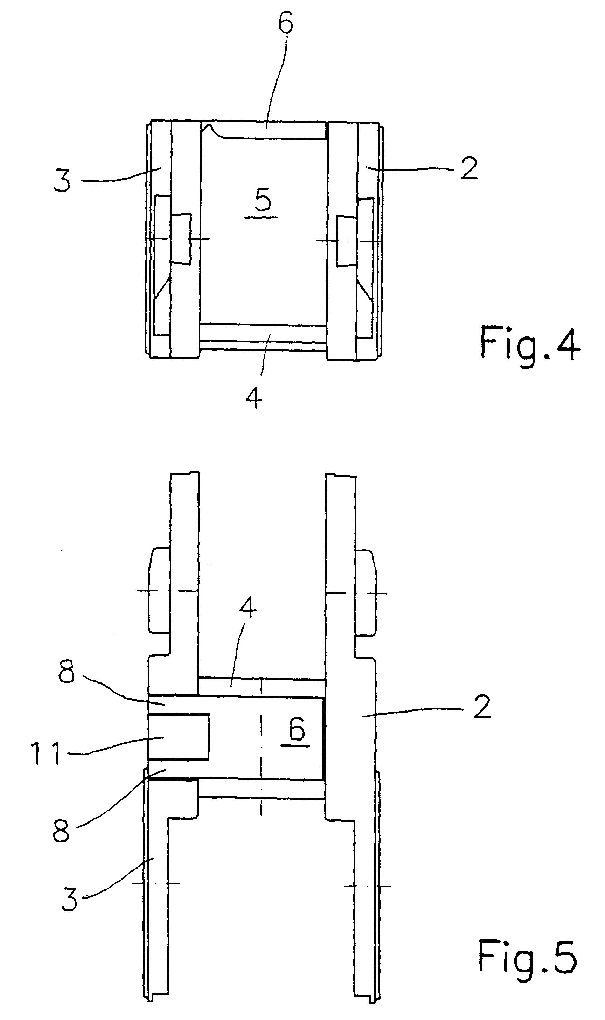

Der Deckel 6 mit der Seitenwand 3 sind durch eine Gelenkverbindung 7 verbunden, durch die der Deckel 6 in zwei unterschiedliche stabile Stellungen bringbar ist. In den Fig. 1, 2 und 3 hat der Deckel 6 eine stabile Stellung eingenommen, wobei der Deckel 6 den Kanalabschnitt 5 freigibt. Der Deckel 6 ist gegen eine Federkraft aus dieser stabilen Stellung in eine andere stabile Stellung bringbar. Die weitere stabile Stellung ist eine Stellung, in der der Deckel 6 im wesentlichen parallel zu der Bodenwand 4 verläuft, wie dies beispielsweise aus der Fig. 4 ersichtlich ist.

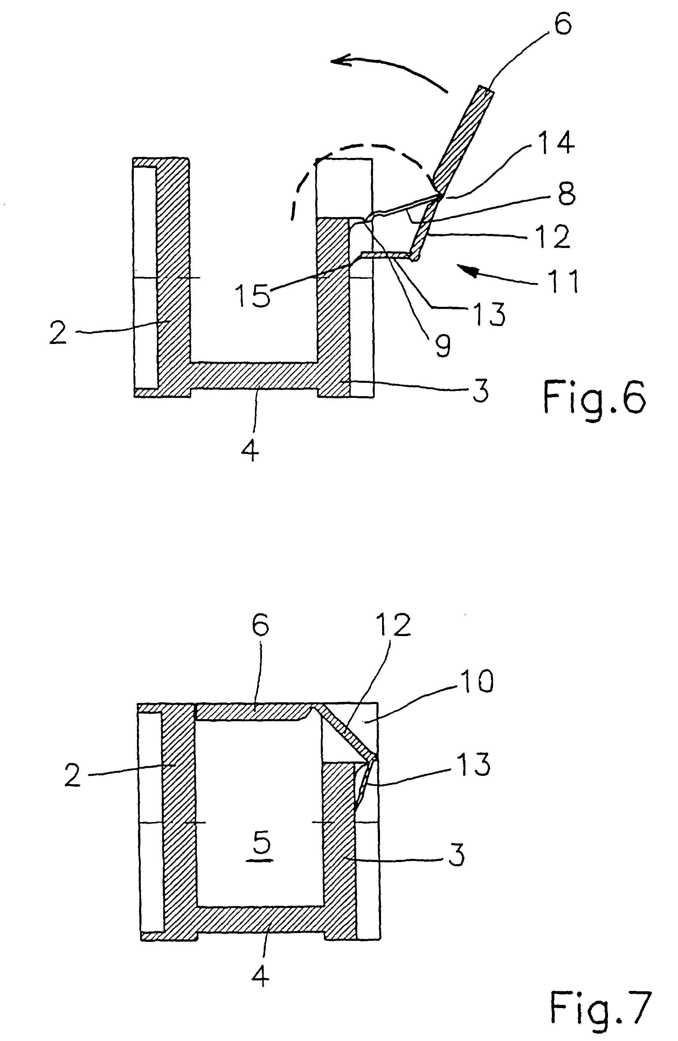

Die Gelenkverbindung 7 weist einen im wesentlichen federelastischen Arm 11 auf. Der in dem darin dargestellten Ausführungsbeispiel dargestellte Arm 11 ist im wesentlichen L-förmig ausgebildet. Er weist einen Teilarm 12 und einen Teilarm 13 auf. Das erste Ende des Armes 11 ist mit dem Deckel 6 verbunden. Das zweite Ende des Arms 11 ist mit der Seitenwand 3 verbunden. Wie aus der Fig. 6 in Verbindung mit der Fig. 7 ersichtlich ist, ist der Arm 11 gelenkig mit der Seitenwand 3 und dem Deckel 6 verbunden.

Der Deckel 6 ist um eine Gelenkachse 9 verschwenkbar. Die Gelenkachse 9 ist so angeordnet, daß diese zwischen den Enden des Armes 11 liegt. Um die Gelenkachse 9 sind die Schwenkarme 8 verschwenkbar, die den Deckel 6 mit der Seitenwand 3 verbinden. In dem dargestellten Ausführungsbeispiel ist zwischen den Schwenkarmen 8 der Arm 11 ausgebildet.

Während eines Verschwenkvorgangs beschreibt der Anlenkpunkt 14, an dem der Schwenkarm 8 mit dem Deckel 6 verbunden ist, eine teilkreisförmige Bahn um die Gelenkachse 9 mit einem Radius, der der Länge des Schwenkarms 8 entspricht. Während dieser Schwenkbewegung wird der L-förmig ausgebildete Arm 11 gestreckt, da der Abstand zwischen dem Gelenk 15, an dem das Ende des Teilarmes 13 an der Seitenwand 3 angelenkt ist und dem Anlenkpunkt 14, an dem das Ende des Teilarmes 12 angelenkt ist, zunimmt. Während der Zunahme der Entfernung zwischen dem Anlenkpunkt 14 und dem Gelenk 15 wird der L-förmige Arm 11 gestreckt. Diese Streckung entspricht einem "Aufbiegen" des L-förmigen Armes 11, wodurch der Arm 11 eine Zugkraft auf den Deckel 6 erzeugt. Die Länge des Schwenkarmes 8 sowie die Gesamtlänge des Armes 11 ist so gewählt, daß während eines Verschwenkvorgangs der Deckel eine Stellung einnimmt, in der der Anlenkpunkt 14, das Gelenk 15 sowie die Gelenkachse 9 auf einer gemeinsamen Geraden liegen. In dieser Stellung hat der Arm 11 seine maximale Strekkung erreicht, in der auch die Federkraft einen Maximalwert erreicht hat. Wird der Deckel 6 weiter verschwenkt, so zieht der Arm 11 den Deckel 6 in eine weitere stabile Stellung. In dieser Stellung verläuft der Deckel 6 vorzugsweise im wesentlichen parallel zu der Bodenwand 4, wie dies insbesondere aus der Fig. 7 ersichtlich ist.

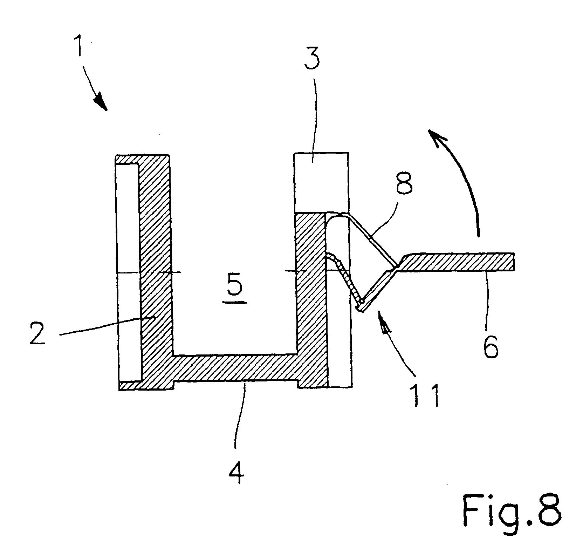

In dem dargestellten Ausführungsbeispiel ist das Schutzelement mit der Gelenkverbindung einteilig ausgebildet. Es ist aus einem Kunststoff hergestellt. Diese Ausführungsform ist nicht zwingend. Der Deckel 6 und die Seitenwand 3 können für sich betrachtet als eine einteilige Baueinheit hergestellt werden. In der Fig. 8 ist das Schutzelement 1 in einer Stellung dargestellt, die es in einer Form einer Spritzgußmaschine einnimmt. Wie aus der Fig. 8 ersichtlich ist, verläuft der Deckel 6 im wesentlichen parallel zu der Bodenwand 4. Die Ausgestaltung des Armes 11 sowie des Schwenkarmes 8 kann durch entsprechende Einsätze in der Form erzeugt werden. Im freien Ende der Seitenwand 3 ist eine Ausnehmung 10 ausgebildet, in die der Teilarm 12 sowie der Schwenkarm 8 hineinragt, wenn der Deckel 6 seine geschlossene Position erreicht hat.

Das erfindungsgemäße Schutzelement ist vorzugsweise so ausgestaltet, daß es mit weiteren Schutzelementen gelenkig verbindbar ist. Zur gelenkigen Verbindung mehrerer Schutzelemente weist jede Seitenwand 2, 3 in einem Endbereich einen Gelenkbolzen 16 und im gegenüberliegenden Endbereich eine Gelenkbohrung 17 auf, die zur Aufnahme eines Gelenkbolzens 16 eines benachbarten Schutzelementes dient.

### BEZUGSZEICHENLISTE

- 1: Schutzelement
- 2: Seitenwand
- 3: Seitenwand
- 4: Bodenwand
- 5: Kanalabschnitt
- 6: Deckel
- 7: Gelenkverbindung
- 8: Schwenkarm
- 9: Gelenkachse
- 10: Ausnehmung
- 11: Arm
- 12: Teilarm
- 13: Teilarm
- 14: Anlenkpunkt
- 15: Gelenk
- 16: Gelenkbolzen
- 17: Gelenkbohrung

## Patentansprüche

1. Schutzelement (1) mit einem Kanalabschnitt (5), insbesondere zur Aufnahme von Leitungen, wobei der Kanalabschnitt (5) durch zwei voneinander beabstandete, einander gegenüberliegende Seitenwände (2, 3), die durch eine Bodenwand (4) verbunden sind, und einen Deckel (6), der an einer Seitenwand (3) angelenkt ist und sich zur gegenüberliegeden Seitenwand (2) hin erstreckt, begrenzt ist, wobei das schutzelement (1) mit anderen Schutzelementen (1) gelenkig verbindbar ist, so daß die Kanalabschnitte (5) einen Kanal für Leitungen bilden dadurch gekennzeichnet, daß der Deckel (6) mit der Seitenwand (3) durch eine Gelenkverbindung (7) untereinander verbunden sind, durch die der Deckel (6) in zwei unterschiedliche stabile Stellungen bringbar ist.

2. Schutzelement nach Anspruch 1, dadurch gekennzeichnet, daß der Deckel (6) gegen eine Federkraft aus der einen in die andere stabile Stellung bringbar ist.

3. Schutzelement nach Anspruch 2, dadurch gekennzeichnet, daß die Gelenkverbindung (7) wenigstens einen Arm (11) mit mindestens einem federelastischen Bereich aufweist, der mit einem ersten Ende mit dem Deckel (6) und mit einem zweiten Ende mit der Seitenwand (3) gelenkig verbunden ist, wobei der Deckel (6) um eine Gelenkachse (9) verschwenkbar ist und die Federkraft einen Maximalwert erreicht, wenn während eines Verschwenkvorgangs des Deckels (6) das erste und das zweite Ende des Armes (11) sowie die Gelenkachse (9) auf einer gemeinsamen Geraden liegen.

4. Schutzelement nach Anspruch 3, dadurch gekennzeichnet, daß der federelastische Bereich durch einen im wesentlichen bogenförmig Abschnitt des Armes (11) ausgebildet ist.

5. Schutzelement nach Anspruch 4, dadurch gekennzeichnet, daß der Arm (11) über seine gesamte Längserstreckung bogenförmig ausgebildet ist.

6. Schutzelement nach Anspruch 3, 4 oder 5, dadurch gekennzeichnet, daß zwei Teilarme (12, 13) einen im wesentlichen L-förmigen Arm (11) bilden.

7. Schutzelement nach einem der Ansprüche 1 bis 6, dadurch gekennzeichnet, daß der Deckel (6) mittels wenigstens eines Schwenkarmes (8) mit der Seitenwand (3) verbunden ist, wobei der Schwenkarm (8) um die Gelenkachse (9) schwenkbar ist.

8. Schutzelement nach einem der Ansprüche 3 bis 6 und Anspruch 7,
dadurch gekennzeichnet, daß zwischen zwei benachbarten Schwenkarmen (8) ein Arm (11) vorgesehen ist.

9. Schutzelement nach einem der Ansprüche 1 bis 8, dadurch gekennzeichnet, daß der Deckel (6) mit der Seitenwand (2) lösbar verbindbar ist.

10. Schutzelement nach Anspruch 9, dadurch gekennzeichnet, daß der Deckel (6) und die Seitenwand (2) Verbindungsmittel zum lösbaren Verbinden aufweist.

11. Schutzelement nach Anspruch 10, dadurch gekennzeichnet, daß die Verbindungsmittel Rastelemente umfaßt.

12. Schutzelement nach einem der Ansprüche 1 bis 11, dadurch gekennzeichnet, daß die Gelenkverbindung (7) mit dem Deckel (6) und/oder der Seitenwand (3) einteilig ausgebildet ist.

## Claims

1. A protective element (1) having a passage portion (5), in particular for receiving lines, wherein the passage portion (5) is defined by two spaced-apart, mutually oppositely disposed side walls (2, 3) which are connected by a bottom wall (4), and a cover (6) which is hinged to a side wall (3) and which extends towards the oppositely disposed side wall (2), wherein the protective element (1) can be hingedly connected to other protective elements (1), so that the passage portions (5) form a passage for lines characterized in that the cover (6) and the side wall (3) are connected together by a hinge connection (7) by means of which the cover (6) can be put in two different stable positions.

2. A protective element according to claim 1 characterized in that the cover (6) is movable from the one stable position into the other stable position against a spring force.

3. A protective element according to claim 2 characterized in that the hinge connection (7) has at least one arm (11) with at least one resilient portion which is hingedly connected by a first end to the cover (6) and by a second end to the side wall (3), wherein the cover (6) is pivotable about a hinge axis (9), and the spring force reaches a maximum value when during a pivotal movement of the cover (6) the first and second ends of the arm (11) and the hinge axis (9) lie on a common straight line.

4. A protective element according to claim 3 characterized in that the resilient portion is provided by a substantially arcuate section of the arm (11).

5. A protective element according to claim 4 characterized in that the arm (11) is of an arcuate configuration over its entire longitudinal extent.

6. A protective element according to claim 3, 4 or 5 characterized in that two arm parts (12, 13) form a substantially L-shaped arm (11).

7. A protective element according to one of claims 1 to 6 characterized in that the cover (6) is connected to the side wall (3) by means of at least one pivotal arm (8), wherein the pivotal arm (8) is pivotable about the hinge axis (9).

8. A protective element according to one of claims 3 to 6 and claim 7 characterized in that there is provided an arm (11) between two adjacent pivotal arms (8).

9. A protective element according to one of claims 1 to 8 characterized in that the cover (6) is releasably connected to the side wall (2).

10. A protective element according to claim 9 characterized in that the cover (6) and the side wall (2) have connecting means for making a releasable connection.

11. A protective element according to claim 10 characterized in that the connecting means comprise latching means.

12. A protective element according to one of claims 1 to 11 characterized in that the hinge connection (7) is made in one piece with the cover (6) and/or the side wall (3).

## Revendications

1. Elément de protection (1) avec une section de canal (5), notamment pour recevoir des lignes, la section de canal (5) étant limitée par deux parois latérales (2, 3) à distance l'une de l'autre et opposées qui sont reliées par une paroi de base (4), et par un couvercle (6) qui est articulé sur une paroi latérale (3) et qui s'étend jusqu'à la paroi latérale opposée (2), l'élément de protection (1) pouvant être relié de façon articulée avec d'autres éléments de protection (1), de sorte que les sections de canal (5) forment un canal pour des lignes, caractérisé en ce que le couvercle (6) et la paroi latérale (3) sont reliés entre-eux par une liaison à articulation (7) par laquelle le couvercle (6) peut être amené en deux positions différentes stables.

2. Elément de protection selon la revendication 1, caractérisé en ce que le couvercle (6) peut être amené d'une position dans l'autre position stable contre un effet de ressort.

3. Elément de protection selon la revendication 2, caractérisé en ce que la liaison à articulation (7) présente au moins un bras (11) avec au moins une section résiliente qui est relié de façon articulée avec une première extrémité au couvercle (6) et avec une deuxième extrémité à la paroi latérale (3), le couvercle (6) pouvant pivoter horizontalement autour d'un axe d'articulation (9) et l'effet de ressort atteignant une valeur maximale quand lors d'un processus de pivotement du couvercle (6) la première et la deuxième extrémité du bras (11) ainsi que l'axe d'articulation (9) se trouvent sur une droite commune.

4. Elément de protection selon la revendication 3, caractérisé en ce que la section résiliente est réalisée par une section du bras (11) ayant sensiblement la forme d'un arc.

5. Elément de protection selon la revendication 4, caractérisé en ce que le bras (11) est réalisé à la façon d'un arc sur toute son étendue horizontale.

6. Elément de protection selon la revendication 3, 4 ou 5, caractérisé en ce que deux bras partiels (12, 13) forment un bras (11) sensiblement en forme de L.

7. Elément de protection selon l'une des revendications 1 à 6, caractérisé en ce que le couvercle (6) est relié à la paroi latérale (3) au moyen d'au moins un bras de pivotement (8), le bras de pivotement (8) étant pivotable autour de l'axe d'articulation (9).

8. Elément de protection selon l'une des revendications 3 à 6, et selon la revendication 7, caractérisé en ce qu'un bras (11) est prévu entre deux bras de pivotement (8) adjacents.

9. Elément de protection selon l'une des revendications 1 à 8, caractérisé en ce que le couvercle (6) peut être lié de façon détachable à la paroi latérale (2).

10. Elément de protection selon la revendication 9, caractérisé en ce que le couvercle (6) et la paroi latérale (2) présentent des moyens pour la liaison détachable.

11. Elément de protection selon la revendication 10, caractérisé en ce que les moyens de liaison comportent des éléments d'encliquetage.

12. Elément de protection selon l'une des revendications 1 à 11, caractérisé en ce que la liaison à articulation (7) est réalisée d'un seul tenant avec le couvercle (6) et/ou avec la paroi latérale (3).
